# EUROPEAN PATENT SPECIFICATION

(11) **EP 2 158 269 B1**
(45) Date of publication and mention of the grant of the patent: **09.08.2017**
(21) Application number: 08735147.4
(22) Date of filing: 10.04.2008
(51) Int. Cl.: C08L 89/06, C08H 1/06, C08L 23/08, C08L 23/10

(54) **BIODEGRADABLE BLENDS BASED ON HYDROLYSED PROTEINS AND FUNTIONALISED ETHYLENE COPOLYMERS**
BIOLOGISCH ABBAUBARE MISCHUNGEN AUF BASIS VON HYDROLYSIERTEN PROTEINEN UND FUNKTIONALISIERTEN ETHYLEN-COPOLYMEREN
MÉLANGES BIODÉGRADABLES À BASE DE PROTÉINES HYDROLYSÉES ET DE COPOLYMÈRES D'ÉTHYLÈNE FONCTIONNALISÉS

(30) Priority: 13.04.2007 IT MI20070762
(43) Date of publication of application: 03.03.2010
(73) Proprietor: Sicit Chemitech S.p.A., 36072 Chiampo (VI) (IT)
(72) Inventor: SARTORE, Luciana, I-36072 Chiampo (VI) (IT); PENCO, Maurizio, I-36072 Chiampo (VI) (IT); SASSI, Andrea, I-36072 Chiampo (VI) (IT); NERESINI, Massimo, I-36072 Chiampo (VI) (IT); CANDIDO, Manuela, Cinzia, I-36072 Chiampo (VI) (IT)
(74) Representative: Minoja, Fabrizio
(86) International application number: PCT/EP2008/002838
(87) International publication number: WO 2008/125272

(56) References cited:
- WO-A-01/12723
- BE-A6- 1 008 639
- CA-A1- 1 180 622
- JP-A- 6 157 915
- SAHA N ET AL: "MODIFICATION OF POLYMERS BY PROTEIN HYDROLYSATE-A WAY TO BIODEGRADABLE MATERIALS" POLYMERS FOR ADVANCED TECHNOLOGIES, WILEY & SONS, BOGNOR REGIS, GB, vol. 14, no. 11/12, 1 November 2003 (2003-11-01), pages 854-860, XP001209235 ISSN: 1042-7147

## Description

### FIELD OF INVENTION

This invention relates to hydrolysed protein or gelatin-polymer blends, processes for their preparation and the use of said adducts in the plastics industry, in particular for the manufacture of packaging, crop protection systems and disposable materials for everyday use. In particular the invention relates to hydrolysed protein-EVA (ethylene vinyl acetate) blends, gelatin-EVA and hydrolysed protein-EVAL (ethylene vinyl alcohol) blends and gelatin-EVAL blends.

### STATE OF THE ART

Biodegradable polymers or bioplastics are an innovation which has been developed by the chemical and plastics industry over the last 15-20 years. The growing interest in plastics made of biodegradable polymers is mainly due to the problems involved in the disposal of plastic waste.

As their structure is similar to that of conventional plastics, bioplastics can be turned into a wide and diversified range of products, using conventional manufacturing methods such as extrusion, moulding, film-coating, thermoforming and production of foam materials. The crucial difference from conventional polymers is that due to their chemical and physical structure, bioplastics can be attacked and degraded by micro-organisms such as fungi and bacteria. Moreover, the use of renewable resources in their manufacturing cycle plays a key role in terms of environmental sustainability. The biomass used in their manufacture constitutes a complement or alternative to resources of fossil origin. The products obtained from it return to the soil at the end of its life cycle through processes of biodegradation or composting, without any release of pollutants.

Biodegradable materials from renewable sources make an important contribution to the introduction of a green economy based on renewable energy sources, chemical precursors and materials. There are many advantages involved in developing these materials, such as reduced dependence on fossil fuels, reduced greenhouse gas emissions, reduced pollutant emissions and toxicity associated with the various stages in the life cycle of conventional materials and processes, exploitation of waste and stocks in the agrifood industry, reduced quantities of waste sent to tips, and the development of environmentally sustainable technologies in general.

Biodegradable materials have various fields of application: films, thermoformed, expanded and extruded products and injection mouldings are used in industry, agriculture, waste management, mass distribution, catering, etc..

This type of material can be divided into two classes: wholly biodegradable polymers and mixtures consisting of a wholly biodegradable polymer (e.g. starch or cellulose) and a non-biodegradable commercial polymer (e.g. LDPE), which are known as biodisintegratable polymers.

The most suitable materials to reduce pollution problems are the wholly biodegradable type; however, as they often present inferior mechanical properties at excessively high prices, biodisintegratable materials which reduce at least the volume of plastic waste, and offer a good compromise of mechanical properties, are used. Many bioplastics are mixtures or blends which contain synthetic components. Synthetic polymers and additives are often used, though in small quantities, to improve the functional properties of the finished product and expand its range of applications.

Different types can be combined with others to form compounds or blends, or semi-finished products such as multi-ply film. In this case the properties and range of applications are generally expanded.

Numerous studies conducted with a view to creating new biodisintegratable materials and evaluating their characteristics are reported in the literature.

Many of them focus on materials with a filler consisting mainly of cellulose obtained from a variety of renewable sources: wood or sawdust, seaweed, cane, coconut, sago starch, sisal, pineapple, linseed and the like.

Other experiments have been conducted on composites with a polyethylene matrix and a protein filler.

Barone J.R. et al. (Composite Science and Technology, Volume 65, Issue 2, February 2005, Pages 173-181) have conducted various studies on polyethylene reinforced with keratin fibres obtained from chicken feathers; after a preliminary feasibility study they evaluated the characteristics of the composite by changing the type of polyethylene used and varying the operating conditions of the Brabender, from which the mixture was obtained, and of the film production press.

Even more interesting is a study conducted by Saha N. et al. (Polym. Adv. Technol., Volume 14, 2003, pages 854-860), who developed a composite, using as polyolefin a low-density polyethylene produced with metallocene catalysts, which gives a linear structure (mLLDPE), while the filler is hydrolysed protein obtained by enzymatic hydrolysis.

These studies did not find any bonds between the matrix and the filler, and the hydrolysed protein was uniformly distributed in the polyethylene; the mechanical properties are reduced in the presence of the filler, whereas the biodegradability improves as the percentage of hydrolysed product increases; according to the authors, the ideal composition contains 20% hydrolysed protein.

### DESCRIPTION OF THE INVENTION

This invention relates to blends obtainable by reactive molten mixing of hydrolysed protein or gelatin or mixtures thereof with functional copolymers, said copolymers being selected from polyvinyl alcohol-co-ethylene (EVAL) or copolymer ethylene vinyl acetate (EVA).

Ethylene vinyl acetate (EVA) or ethylene vinyl alcohol (EVAL) copolymers are preferred, wherein the degree of substitution, namely the quantity of -(CH₂-CHR)- units compared with -(CH₂-CH₂)- ethylene units, falls into the range 1-100%.

Transfer agents, transesterification catalysts or ring opening catalysts or oxidizing agents can be added to the formulation.

Tetrabutylammonium tetraphenylborate, tin 2-ethylhexanoate or N-acetyl-epsilon caprolactone is preferably added as transfer agent. A preferred oxidizing agent is dicumyl peroxide.

When said copolymers are selected from EVAL a plasticiser such as glycerol, polyethylene glycol or propanediol is added to the reaction mixture. Pigments and/or dyes and reinforcing materials such as fibres and/or particles(e.g. carbon black, natural fibres such as cellulose) may also be added to the mixture.

According to the invention, the hydrolysed protein and/or gelatin has a nitrogen α-aminic content lower than 0.5% (by weight) per each percent unit of organic nitrogen. The hydrolysed product is obtained from by-products and/or waste and/or residues originating from the tanning industry, obtained before and after the tanning stage, or from by-products and/or products of plant origin, agro-industrial waste, by-products and/or products of animal origin.

The hydrolysed proteins can be present in the blends according to the invention in percentages ranging between 1 and 95% in order to enhance particular properties associated with the effects required, preferably from 5 to 80%, while ethylene polymers could be present in percentages ranging from 5 to 99%.

Preferred examples of hydrolysed proteins used in the tests described derive from the processing of tanning waste. They are characterised by a particular aminoacid composition deriving from the starting material. Other hydrolysed proteins of different origins can be used to meet particular market and operational demand such as the need for material deriving only from raw materials not of animal origin, or the need for mechanical characteristics, degradability or differentiated compositions.

The blends to which the invention relates present optimum mechanical properties which, surprisingly, do not significantly decline as the hydrolysed protein content increases; blends containing up to 35% hydrolysed protein maintain their properties, and the modulus of elasticity actually improves, while blends containing 50% hydrolysed protein still demonstrate very good properties (ultimate elongation approx. 500%) and a modulus of elasticity 10-15 times the modulus of the starting polymer. This result is very surprising in view of the fact that examples of different types of blends wherein the presence of only 20% hydrolysed protein drastically affects the mechanical properties, which are obviously crucial for the purpose of the applications considered, are reported in the literature.

Further characteristics and advantages of the materials according to the invention will clearly appear from the description below, relating to examples of embodiment. In the examples below, the term "Ip" or "PP" indicates hydrolysed protein or gelatin, while the polymers will be indicated with the conventional codes.

### EXAMPLES

### Blends with poly(vinyl alcohol-co-ethylene)(EVAL)

### Examples 1-3 Binary blends with EVAL 27

In order to lower the melting point of EVAL, that polymer was mixed with a plasticiser using a Brabender discontinuous mixer. A known quantity of EVAL 27 (ethylene 27 mol %) was loaded into the mixer, and a quantity of glycerol ranging between 12.5 and 30% was added (Table 1). The mixing conditions were: T ₘᵢₓₑᵣ = 220°C, v = 50 rpm, time=10 min. The products were then isolated and the calorimetric parameters such as Tg and Tm were assessed (Table 1).

### Examples 4-8 Binary blends with EVAL 44

The methodology of examples 1-3 was used, EVAL 44 (ethylene 44 mol%) being loaded into the mixer instead of EVAL 27. Glycerol was then added in a quantity ranging between 20 and 30% (Table 1), and the product was mixed under the following conditions: T ₘᵢₓₑᵣ=200°C, v=50rpm, time= 10 min. The products were then isolated and the calorimetric parameters such as Tg and Tm were assessed (Table 1).

**Table 1 - Ethylene vinyl alcohol (EVAL) plasticised with glycerol**

| Examples | Code | EVAL27 (%) | EVAL44 (%) | Glyc. (%) | T mixer (°C) | Wtot mixer (g) | Tm | Tg |
|---|---|---|---|---|---|---|---|---|
| | EVAL27 | 100 | | | | | 187.76 | 63.67 |
| | | | | | | | | 133.99 |
| Es. 1 | EVAL27_GLI30 | 68.75 | - | 31.25 | 220 | 48 | 160.73 | * |
| Es. 2 | EVAL27_GLI30(2) | 70 | - | 30 | 220 | 52.86 | 152.69 | 49.04 |
| Es. 3 | EVAL27_GLI12,5 | 87.48 | - | 12.5 | 220 | 44.58 | 171.75 | 19.02 |
| | | | | | | | | 114.55 |
| | EVAL44 | 100 | | | | | 166.67 | 61.14 |
| | | | | | | | | 127.05 |
| Es. 4 | EVAL44_GLI20 | - | 80.48 | 19.5 | 200 | 49.7 | 141.82 | 32.24 |
| Es. 5 | EVAL44_GLI30 | - | 70 | 30 | 200 | 54.3 | 130.43 | 6.5 |
| | | | | | | | | 41.99 |
| Es. 6 | EVAL44_GLI30(2) | - | 71.1 | 28.9 | 200 | 53.61 | 132.18 | 44.7 |
| Es. 7 | EVAL44_GLI30(3) | - | 69.35 | 30.64 | 200 | 54.88 | 131.91 | 8.25 |
| | | | | | | | | 46.12 |
| Es. 8 | EVAL44_GLI30(4) | - | 69.64 | 30.36 | 200 | 54.75 | 133.26 | 7.08 |
| | | | | | | | | 44.03 |

### Example 9-13 Ternary blends

The products obtained as described in examples 4-8 were loaded into the discontinuous mixer, and hydrolysed protein (N α-aminic 2.11% w/w) was added in quantities ranging between 35 and 75% (Table 2). The products were mixed under the following conditions: T ₘᵢₓₑᵣ=150°C, v= 50 rpm, time= 7 min. The products were then isolated and the calorimetric parameters such as Tg and Tm were assessed (Table 2).

### Examples 14-16 Ternary blends with transfer agents

The ternary blends Hydrolysed protein-EVAL-Glycerol can be prepared as described in examples 9-13 with the addition of transfer agents such as tetrabutylammonium tetraphenylborate (TB), tin 2-ethylhexanoate (Sn) or N-acetyl-epsilon caprolactone (CL) in the quantity of 1% (weight/weight). The products were mixed under the same conditions as described in example 3, isolated and characterised by DSC (Table 2).

**Table 2 - Hydrolysed Protein - (EVAL) - Glycerol**

| Examples | Code | IP (1) (%) | EVAL44 (%) | Glyc (%) | Cat (1%) | Tmixer (°C) | Wmixer (g) | Tg (°C) |
|---|---|---|---|---|---|---|---|---|
| | PP | 100 | | | | | | 129.78 |
| Es. 9 | PP75%_EVAL44_GLI20 | 74.33 | 19.68 | 5.98 | - | 150 | 50.92 | 48.63 |
| Es. 10 | PP60%_EVAL44_GLI20 | 57.78 | 31.48 | 10.74 | - | 150 | 52.34 | * |
| Es. 11 | PP55%_EVAL44_GLI30 | 54.46 | 31.88 | 13.66 | - | 150 | 55.81 | 10.43 |
| | | | | | | | | 44.1 |
| Es. 12 | PP35%_EVAL44_GLI30 | 36.6 | 44.36 | 19 | - | 150 | 54.05 | 43.86 |
| Es. 13 | PP70%_EVAL44_GLI30 | 70.34 | 20.95 | 8.98 | - | 150 | 54.23 | 25.74 |
| | | | | | | | | 71.53 |
| Es. 14 | PP35%_EVAL44_GLI30(TB) | 36.16 | 44.13 | 18.9 | TB(2) | 150 | 53.93 | * |
| Es. 15 | PP35%_EVAL44_GLI30(Sn) | 36.67 | 43.77 | 18.76 | Sn (3) | 150 | 54.54 | * |
| Es. 16 | PP35%_EVAL44_GLI30(CL) | 36.51 | 44.7 | 18 | CL (4) | 150 | 54.23 | * |

| | | | | | | | | |
|---|---|---|---|---|---|---|---|---|
| (1): IP=hydrolysed protein batch A02/44/02 characterised by: - Dry matter 94.07% w/w - N α-aminic 2.11% w/w (2): TB= tetrabutylammonium tetraphenylborate (3): Sn= tin 2-ethylhexanoate (4): CL= N-acetyl-epsilon caprolactone *= Tg not detectable | | | | | | | | |

### Blends with poly(ethylene-co-vinyl acetate)(EVA)

### Example 17 Binary blends

A known quantity of hydrolysed protein was loaded into the mixer and EVA (40 wt. % vinyl acetate) was added (Table 3). The mixing conditions were: T ₘᵢₓₑᵣ = 140°C, v = 50 rpm, time=7 min. The products were then isolated and the calorimetric parameters such as Tg and Tm were assessed (Table 3).

### Examples 18-20 Ternary blends

Known quantities of hydrolysed protein were loaded into the mixer, and EVA (40 wt. % vinyl acetate) and glycerol were added in the quantities shown in Table 3. The mixing conditions were: T ₘᵢₓₑᵣ = 140°C, v = 50 rpm, time=7 min. The products were isolated, and the calorimetric parameters such as Tg and Tm were assessed (Table 3).

### Examples 21-26 Binary blends with transfer agents

Blends based on hydrolysed protein (up to 50%) and EVA were obtained by mixing the two components in variable percentages (Table 3) in the presence of transfer agents such as tetrabutylammonium tetraphenylborate (TB), tin 2-ethylhexanoate (Sn) or N-acetyl-epsilon caprolactone (CL) in the quantity of 1% (weight/weight). The mixing conditions were: T ₘᵢₓₑᵣ = 140°C, v = 50 rpm, time=7 min. The products were then isolated and the calorimetric parameters such as Tg and Tm were assessed (Table 3).

**Table 3 - Blends with ethylene vinyl acetate (EVA)**

| Examples | code | IP (1) (%) | EVA(5) (%) | Glyc (%) | Cat (1%) | Tmixer | Tg (°C) |
|---|---|---|---|---|---|---|---|
| | EVA | | 100 | | | | -32.18 |
| ES. 17 | PP50%_EVA | 50.4 | 49.6 | - | - | 150 | * |
| | PP50%_EVA | 50.4 | 49.6 | - | - | 140 | * |
| Es. 18 | PP35%_EVA_GLI30 | 36.76 | 45.19 | 18 | - | 140 | * |
| Es. 19 | PP55%_EVA_GLI30 | 53.5 | 34.57 | 12 | - | 140 | * |
| Es. 20 | PP70%_EVA_GLI | 70.97 | 24.47 | 4.6 | - | 140 | 43.44 |
| Es. 21 | PP35%_EVA(TB) | 36 | 63 | - | TB (2) | 140 | 43.17 |
| Es. 22 | PP35%_EVA(Sn) | 36.15 | 62.94 | - | Sn (3) | 140 | 43.91 |
| Es. 23 | PP35%_EVA(CL) | 35.93 | 63.07 | - | CL(4) | 140 | 45 |
| Es. 24 | PP50%_EVA(TB) | 49.42 | 49.55 | | TB (2) | 140 | |
| Es. 25 | PP50%_EVA(Sn) | 49.7 | 49.2 | - | Sn (3) | 140 | |
| Es. 26 | PP50%_EVA(CL) | 49.48 | 49.49 | | CL(4) | 140 | |

| | | | | | | | |
|---|---|---|---|---|---|---|---|
| (1): IP=hydrolysed protein batch A02/44/02 characterised by: - Dry matter 94.07% w/w - N α-aminic 2.11% w/w (2): TB= tetrabutylammonium tetraphenylborate (3): Sn= tin 2-ethylhexanoate (4): CL= N-acetyl-epsilon caprolactone (5): poly(ethylene-co-vinyl acetate)(EVA), 40 wt.% vinyl acetate. *= Tg not detectable | | | | | | | |

### Mechanical characterisation

### Example 27 Compression Moulding of specimens and films

Specimens and films of variable size and thickness were obtained by compression moulding from the blend obtained as described in the examples described above. The parameters set on the press are:
1. blends with EVAL

| | | | |
|---|---|---|---|
| Melting | T=150°C | t=180sec | p=6bar |
| Compression | T=150°C | t=30sec | p=30 bars |
| Cooling | T=20°C | t=360sec | p=30 bars |

2. blends with EVA

| | | | |
|---|---|---|---|
| Melting | T=140°C | t=180sec | p=6 bars |
| Compression | T=140°C | t=30sec | p=30 bars |
| Cooling | T=20°C | t=360sec | p=30 bars |

The specimens and films are of excellent quality and present no significant surface defects, thus demonstrating the excellent workability of the materials.

### Example 28 Dynamic/mechanical tests

Dynamic/mechanical tests were performed on specimens of a suitable size under the following operating conditions:
Temperature range considered 30-100°C, heating rate 1°C/min, frequency 5 Hz. With this technique it was possible to determine the dynamic modulus and the glass transition temperature (Tg) of the materials (Table 4).

### Example 29 Tensile tests

The tensile test was conducted in accordance with standard ASTM D 882, with a crosspiece advance rate amounting to 10 mm/min. Table 4 shows the modulus of elasticity, yield point, ultimate tensile strength and ultimate elongation of the various materials.

**Table 4 - Mechanical properties of the blends obtained**

| **Code** | **DMTA** | | **TENSILE** | | | |
|---|---|---|---|---|---|---|
| | **E' (MPa)** | **Tg (°C)** | **E (MPa)** | **σf (MPa)** | **Δε (%)** | **σy (MPa)** |
| EVA | | | 2.39 | >1.6 | >700 | - |
| Sicit 51 | 491.81 | 54 | 797.92 | 14.5 | >100 | 13.67 |
| PP35%_EVA | - | - | 6.76 | 2.4 | 320 | - |
| PP35%_EVA(TB) | | | 6.07 | >1.4 | >700 | 1.06 |
| PP35%_EVA(TB) | 7.84 | | 10.93* | >1.4* | >920* | 0.99* |
| PP35%_EVA(Sn) | 7.5 | | 5.18 | >1.7 | >700 | - |
| PP35%_EVA(CL) | 7.53 | | 5.32 | >1.8 | >700 | - |
| PP50%_EVA(TB) | | | 22.55 | 1.45 | 237 | - |
| PP50%_EVA(Sn) | | | 34.95 | 1.6 | 95 | - |
| PP50%_EVA(CL) | | | 28.05 | 1.3 | 205 | - |
| EVAL | | | 2568 | 55.34 | 3 | - |
| PP35%_EVAL44_GLI30 | | | 372.3 | 14.75 | 14 | - |
| PP35%_EVAL44_GLI30(TB) | | | 300 | 13.38 | 15 | - |
| PP35%_EVAL44_GLI30(Sn) | | | 266.5 | 12 | 13 | - |
| PP35%_EVAL44_GLI30(CL) | | | 282.2 | 11.7 | 15 | - |

| | | | | | | |
|---|---|---|---|---|---|---|
| * data obtained with specimens different from those specified in the standard. | | | | | | |

### Example 30 Maintenance of crystallinity in blends with ethylene vinyl alcohol

Using a calorimetric test conducted with DSC, it was possible to determine the melting enthalpy for the samples presenting crystallinity. By comparison it was found that this crystallinity, due to the presence of the polymer EVAL, is maintained in all blends that contain it. The percentage crystallinity of polymers is a very important parameter because it affects the mechanical, optical and diffusion properties of the product.

**Table 5 - Maintenance of crystallinity in blends with ethylene vinyl alcohol**

| Code | Tm (°C) | ΔHMelting(J/g) | (ΔHblend-ΔHpolym) /ΔHblend (%) |
|---|---|---|---|
| EVAL44 | 166.67 | 54.08 | 100 |
| EVAL44_gli20 | 141.82 | 46.63 | +7.14 |
| EVAL44_gli30 1 | 132.18 | 42.62 | +10.84 |
| EVAL44_gli30 2 | 131.91 | 39.88 | +6.33 |
| EVAL44_gli30 3 | 130.43 | 43.94 | +16.07 |
| EVAL44_gli30 4 | 133.26 | 39.99 | +4.72 |
| PP35_EVAL44_gli30 | 144.67 | 26.84 | +11.88 |
| PP35_EVAL44_gli30(Sn) | 146.61 | 25.65 | +8.36 |
| PP35_EVAL44_gli30(TB) | 144.76 | 24.01 | +0.6 |
| PP35_EVAL44_gli30(CL) | 144.13 | 25.12 | +3.9 |

## Claims

1. Blends obtainable by reactive molten mixing of hydrolysed proteins, gelatins or mixtures thereof with functional copolymers with an ethylene base, said copolymers being selected from poly(vinyl alcohol-co-ethylene) (EVAL) or copolymer ethylene vinyl acetate (EVA) wherein the hydrolysed protein is obtained from:
- by-products and/or waste and/or residues originating from the tanning industry, obtained before and after the tanning stage; or
- products and/or by-products and/or waste and/or residues and/or industrial or agrifood waste of animal or plant origin;
and wherein when said copolymers are selected from EVAL, the blends also include glycerol.

2. Blends as claimed in claim 1, wherein the functional copolymers with an ethylene base have a degree of substitution in the interval 1-100%.

3. Blends as claimed in any of claims 1 and 2, wherein the hydrolysed protein and/or gelatin presents a nitrogen α-aminic content lower than 0.5% (by weight) per each percent unit of nitrogen.

4. Blends as claimed in any of claims 1 to 3, obtainable in the presence of transfer agents, transesterification catalysts or ring opening catalysts or oxidizing agents.

5. Blends as claimed in claim 4, wherein tetrabutylammonium tetraphenylborate, tin 2-ethylhexanoate or N-acetyl-epsilon caprolactone are used as transfer agents and dicumyl peroxide as oxidizing agent.

6. Blends as claimed in any of claims 1 to 5, also including pigments such as carbon black and/or reinforcing agents such as cellulose fibres or particles.

7. Biodisintegradable materials comprising the blends claimed in claims 1-6.

## Patentansprüche

1. Mischungen erhältlich durch reaktives geschmolzenes Mischen von hydrolysierten Proteinen, Gelatine oder Mischungen davon mit funktionellen Copolymeren auf Ethylenbasis, wobei diese Copolymere ausgewählt sind aus Ethylen-Vinylalkohol-Copolymer (EVAL) oder Ethylen-Vinylacetat-Copolymer (EVA), wobei das hydrolysierte Protein erhalten wurde aus:
- Nebenprodukte und / oder Abfälle und / oder Rückstände aus der Bräunungsindustrie, die vor und nach dem Bräunungsstadium gewonnen wurden; oder
- Produkte und / oder Nebenprodukte und / oder Abfälle und / oder Rückstände und / oder industrielle oder landwirtschaftliche Abfälle tierischen oder pflanzlichen Ursprungs;
und wobei, wenn die genannten Copolymere ausgewählt sind aus EVAL, die Mischungen auch Glycerin enthalten.

2. Mischungen nach Anspruch 1, **dadurch gekennzeichnet, dass** die funktionellen Copolymere auf Ethylenbasis einen Substitutionsgrad im Bereich von 1 bis 100 % aufweisen.

3. Mischungen nach einem der Ansprüche 1 oder 2, **dadurch gekennzeichnet, dass** das hydrolysierte Protein und / oder Gelatine einen α-aminischen Stickstoffgehalt von weniger als 0,5% (bezogen auf das Gewicht) für jede Prozenteinheit von Stickstoff enthalten.

4. Mischungen nach einem der Ansprüche 1 bis 3, erhältlich in Gegenwart von Transferagenzien, Umesterungskatalysatoren oder Ringöffnungskatalysatoren oder Oxidationsmitteln.

5. Mischungen nach Anspruch 4, **dadurch gekennzeichnet, dass** Tetrabutylammonium tetraphenylborat, Zinn 2-ethylhexanoat oder N-Acetyl-epsilon-Caprolacton als Transferagenzien und Dicumylperoxid als Oxidationsmittel verwendet werden.

6. Mischungen nach einem der Ansprüche 1 bis 5, die auch Pigmente wie Ruß und / oder Verstärkungsmittel wie Cellulosefasern oder Partikel enthalten.

7. Biodisintegrierbare Materialien, umfassend die in den Ansprüchen 1 bis 6 beanspruchten Mischungen.

## Revendications

1. Mélanges pouvant être obtenus par mélange réactif à l'état fondu de protéines hydrolysées, de gélatines ou leurs mélanges avec des copolymères fonctionnels avec une base d'éthylène, lesdits copolymères étant sélectionnés parmi le poly(alcool de vinyle-co-éthylène) (EVAL) ou le copolymère d'éthylène-acétate-de-vinyle (EVA) où la protéine hydrolysée est obtenue à partir :
- de sous-produits et/ou de déchets et/ou de résidus provenant de l'industrie du tannage, obtenus avant et après l'étape de tannage ; ou
- de produits et/ou de sous-produits et/ou de déchets et/ou de résidus et/ou de déchets d'origine industrielle ou agro-alimentaire d'origine animale ou végétale ;
et où lorsque lesdits copolymères sont sélectionnés parmi l'EVAL, les mélanges incluent également le glycérol.

2. Mélanges tels que revendiqués selon la revendication 1, dans lesquels les copolymères fonctionnels avec une base éthylène ont un degré de substitution situé dans l'intervalle de 1 à 100 %.

3. Mélanges tels que revendiqués selon l'une quelconque des revendications 1 et 2, dans lesquels la protéine hydrolysée et/ou la gélatine présente une teneur en azote α-aminique inférieure à 0,5 % (en poids) pour chaque unité en pourcentage d'azote.

4. Mélanges tels que revendiqués selon l'une quelconque des revendications 1 à 3, pouvant être obtenus en la présence d'agents de transfert, de catalyseurs de transestérification ou de catalyseurs d'ouverture de cycle ou d'agents oxydants.

5. Mélanges tels que revendiqués selon la revendication 4, dans lesquels du tétraphénylborate de tétrabutylammonium, du 2-éthylhexanoate d'étain, ou de la N-acétyl-epsilon caprolactone sont utilisés comme agents de transfert et du peroxyde de dicumyle comme agent oxydant.

6. Mélanges tels que revendiqués selon l'une quelconque des revendications 1 à 5, incluant également des pigments tels que du noir de carbone et/ou des agents de renfort tels que des fibres ou des particules de cellulose.

7. Matériaux biodésintégrables comprenant les mélanges revendiqués selon les revendications 1 à 6.
